# EUROPEAN PATENT APPLICATION

(11) **EP 4 785 770 A1**
(43) Date of publication of application: **05.08.2026**
(21) Application number: 25216278.9
(22) Date of filing: 17.11.2025
(51) Int. Cl.: A01D 34/00

(54) **GRASS MOWING VEHICLE AND COMPUTER IMPLEMENTED METHOD OF OPERATING SUCH**

(30) Priority: 31.01.2025 US 202519042869
(71) Applicant: Deere & Company, Moline, IL 61265 (US)
(72) Inventor: Carnahan, Bryce, Mannheim (DE); Waitt, Taylor, Mannheim (DE)
(74) Representative: Reichert, Christian

(57) **Abstract**

A grass mowing vehicle (100) is disclosed. The grass mowing vehicle, comprising: a propulsion subsystem (112); a steering subsystem (114); a cutting unit (104, 106); a perception system (246), including a perception sensor (120), configured to generate a perception signal; and a mower control system (105) configured to determine whether a human supervisor (222) is locally present to the grass mowing vehicle (100) based on the perception signal and control autonomous operation (252) of the grass mowing vehicle (100) based on whether the human supervisor (222) is locally present to the grass mowing vehicle (100). Furthermore, a computer implemented method of operating such grass mower vehicle (100) is disclosed.

## Description

### FIELD OF THE DESCRIPTION

The present description relates to grass mowing vehicles. More specifically, the present description relates to using a perception system to confirm local supervisor presence relative to a grass mowing vehicle.

### BACKGROUND

There are a wide variety of different types of grass mowing vehicles used to mow golf courses, parks, athletic fields, and lawns. Grass mowing vehicles can include functionality for automatically controlling travel path and other operating settings of the grass mowing vehicles during a mowing operation. A path planner can be used to generate a path plan for a grass mowing vehicle that can include a route, including swaths (cutting passes) connected by turns, as well as other prescriptive operating settings along the route.

The discussion above is merely provided for general background information and is not intended to be used as an aid in determining the scope of the claimed subject matter.

### SUMMARY

A local confirmation criteria detector on a grass mowing vehicle detects criteria indicative of whether a local supervisor presence confirmation is to be performed. If so, a perception system on the grass mowing vehicle detects the presence of a supervisor and generates a sensor signal. A presence confirmation system processes the sensor signal generated by the perception sensor to identify one or more characteristics of the supervisor. Local supervisor presence relative to the grass mowing vehicle is confirmed based upon the one or more characteristics of the supervisor. This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial schematic diagram of one example of a grass mowing vehicle.
FIG. 2A is a block diagram showing a mowing vehicle control system in more detail.
FIG. 2B is a block diagram showing one example of a gesture recognition system in more detail.
FIGs. 3A and 3B (collectively referred to herein as FIG. 3) show a flow diagram illustrating one example of the operation of the mowing vehicle control system in using a perception sensor to confirm local supervisor presence relative to the mowing vehicle.
FIG. 4 is a block diagram showing one example of the mowing vehicle deployed in a remote server architecture.
FIGs. 5, 6, and 7 show examples of mobile devices that can be used in the systems and architectures shown in other FIGs.
FIG. 8 is a block diagram showing one example of a computing environment that can be used in the systems and architectures shown in other FIGs.

### DETAILED DESCRIPTION

As discussed above, it is not uncommon for a grass mowing vehicle to mow an area of interest (e.g., the area to be mowed) according to a route defined by a path plan that is generated by a path planning system. The path planning system generates swaths (or cutting passes) and connects those swaths or cutting passes with turns to generate the path plan. One example of a site where a grass mowing vehicle is used to mow grass is a fairway on a golf course. The grass mowing vehicle often cuts the swaths or passes, traversing the fairway, and navigates the turns outside the boundary of the fairway.

Some current systems perform such navigation autonomously, in that there is no supervisor locally present to the grass mowing machine while the grass mowing vehicle is being navigated along its cutting route defined by the path plan. In such autonomous systems, perception sensors may be deployed on the grass mowing vehicle. The perception sensors may be mounted so that they have intersecting or overlapping fields of view which cover the entire periphery of the grass mowing vehicle. This type of coverage can be referred to as a perception bubble.

When the perception system is activated, things that enter or exit the perception bubble can be perceived and detected by the perception sensor. Therefore, if an obstacle, for instance, enters the perception bubble, the grass mowing vehicle can be autonomously controlled accordingly, such as to stop, to travel around the obstacle, or to perform other operations. For example, while the grass mowing vehicle is mowing a golf course fairway, the grass mowing vehicle may approach a golf bag that is lying on the fairway along the route being traveled by the grass mowing vehicle. When the grass mowing vehicle is close enough to the golf bag that the golf bag is detected by the perception sensors, then the golf bag enters the perception bubble ahead of the grass mowing vehicle in the direction of travel. In that case, the golf bag may be detected and, instead of running over the golf bag, the grass mowing vehicle may be diverted around the golf bag, may stop until the golf bag is removed, or be controlled and other appropriate ways.

Similarly, before engaging an autonomous system to begin controlling the grass mowing vehicle, it may be desirable to have a human supervisor approach the grass mowing vehicle and inspect certain portions of the grass mowing vehicle, or certain areas within the perception bubble to identify potentially problematic conditions. For instance, it may be desirable to have a human supervisor observe the tires on the grass mowing vehicle to ensure that none are flat or need air. It may be desirable to have the human supervisor inspect an area under the grass mowing vehicle to ensure that there are no obstacles under the grass mowing vehicle. It may be desirable to have a human supervisor inspect an oil gauge or other fluid gauges to ensure that the fluid levels are appropriate, and/or to perform other observations or inspections to ensure accurate and efficient autonomous operation of the grass mowing vehicle.

Thus, under certain circumstances, a human supervisor may be prompted through an application on a mobile device, or in another way, to approach a grass mowing vehicle to perform an inspection. Once the inspection is performed, the human supervisor may be prompted to provide a supervisor input indicating that the inspection was indeed performed and indicating whether conditions are favorable for autonomous operation. However, there may be certain inspections or operations that the human supervisor is requested to perform that are difficult or time-consuming to perform correctly. In such cases, a human supervisor may wish to skip those inspections, or they may perform them inaccurately even while intending to perform them accurately.

The present description thus describes a system that uses a perception system to detect characteristics of a human supervisor or observer (hereinafter referred to as a supervisor) in a local environment of a grass mowing vehicle. A local presence confirmation system processes the characteristics to confirm the supervisor's local presence, and the characteristics can also be processed to confirm that the human supervisor has performed certain inspections, performed them to a desired level of accuracy, or performed in other ways.

For instance, the local presence confirmation system can process an output from the perception system to confirm that the supervisor is locally present to the grass mowing vehicle (e.g., within a desired distance and/or at a desired location relative to the grass mowing vehicle). Further, the local presence confirmation system may wish to determine that a particular individual human supervisor (who may be assigned to the grass mowing vehicle) is the human supervisor who is present. Such confirmation can be performed using facial or biometric recognition and comparing the facial features or biometrics output by the perception system against supervisor profile information. The results can be cross checked against mower assignment data which can be used to identify which particular human supervisor is assigned to which particular grass mowing vehicle.

The local presence confirmation system may be configured to ensure that the human supervisor has performed certain operations or has at least performed them to a desired or acceptable level. Thus, the local presence confirmation system can be configured to detect a wearable component that is being worn by the supervisor or detect movement of the human supervisor in other ways. Further, the local presence confirmation system can prompt the supervisor to perform gestures that can be recognized by a gesture recognition system. The gestures may be gestures using the supervisors extremities, ambulation patterns through which the supervisor moves and that are recognized by an ambulation pattern recognizer, postures that the supervisor is prompted to assume (such as to pay attention to the tires, gauges, hoses, etc) and which are recognized by a posture pattern recognizer, or specific actions that the supervisor is prompted to perform. Such specific actions can be recognized by a specific action recognizer. Such gestures, patterns, and actions can be predefined to ensure that the supervisor is indeed performing inspections and is performing them with a reasonable degree of accuracy.

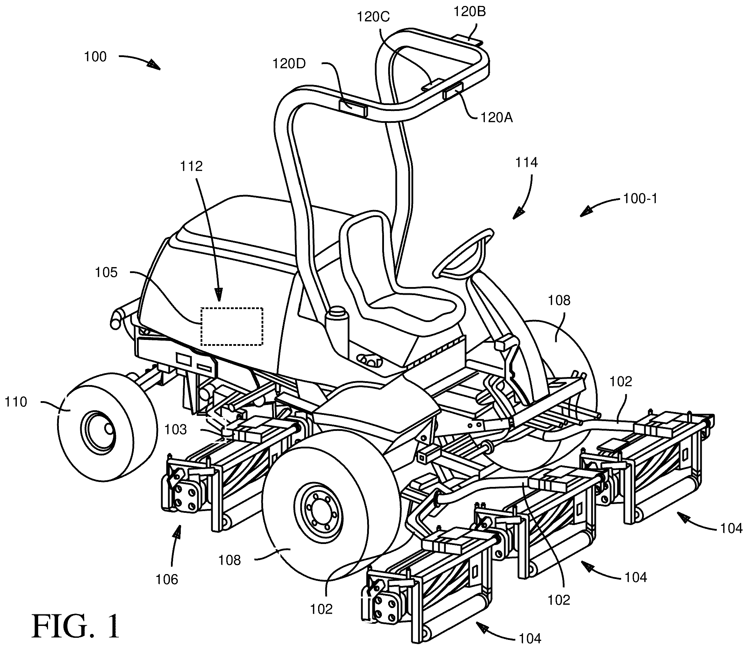

FIG. 1 is partial pictorial, partial schematic illustration of one example of a grass mowing vehicle 100. In the example shown in FIG. 1, grass mowing vehicle 100 is a fairway mowing vehicle 100-1. Fairway mowing vehicle 100-1 includes a plurality of front cutting units 104 and one or more rear cutting units 106. The position of front cutting units (or cutting heads) 104 and rear cutting units (or cutting heads) 106 may be controllably set and adjusted by virtue of one or more movable support apparatuses, illustratively shown as 102 and 103. Thus, movable support apparatuses 102 and 103 may include raise/lower actuator assemblies that are used to raise the cutting units 104 and 106 out of engagement with the grass and to lower cutting units 104 and 106 into engagement with the grass in a selectively controllable manner. In FIG. 1, fairway mowing vehicle 100-1 further includes left and right drive wheels 108 and one or more steerable left and right rear wheels 110.

Fairway mowing vehicle 100-1 includes a number of controllable subsystems, some of which are shown in FIG. 1. As illustrated, fairway mowing vehicle 100-1 includes a propulsion subsystem, indicated generally by arrow 112, and a steering subsystem, indicated generally by arrow 114.

Propulsion subsystem 112 includes a powerplant (e.g., internal combustion engine, batteries, hybrid (combustion engine and batteries), etc.) as well as other drivetrain elements (e.g., gearbox, axles, brakes, actuators such as electric motors, etc.). In one particular example, propulsion subsystem 112 includes an electric motor corresponding to each of left and right drive wheels 108, wherein the corresponding motor is used to drive the left and right drive wheels 108. The electric motors are powered by on-board batteries which can be charged by an internal combustion engine or by another source.

Steering subsystem 114 includes one or more actuators (e.g., linear actuators, hydraulic actuators, etc.) and linkages used to change orientation (e.g., turn angle) of steerable left and right rear wheels 110 to change a heading of fairway mowing vehicle 100-1.

As illustrated in FIG. 1, fairway mowing vehicle 100-1 includes a mowing vehicle control system 105, one example of which is described in greater detail with respect to other FIGs. In one example, mowing vehicle control system 105 can include controller(s), sensors, computing device(s), etc. Mowing vehicle control system 105 is operable to send control signals to control controllable subsystems, including propulsion subsystem 112 and steering subsystem 114, to set and adjust operating parameters of fairway mowing vehicle 100-1, such as travel direction (or heading) and travel speed, raising and lowering the cutting units 104, 106 either as a group or in subsets or individually, and/or other operating parameters of fairway mowing vehicle 100-1. As will be discussed in more detail with respect to other FIGs., control system 105 can include, or be implemented by, memory storing instructions and one or more processors that execute the instructions.

In the example shown in FIG. 1, grass mowing vehicle 100-1 also includes one or more perception sensors 120. In the example shown in FIG. 1, perception sensors 120 include a plurality of separate sensors 120A, 120B, 120C, and 120D. The perception sensors 120A - 120D can be considered as part of mower control system 105.

In the example shown in FIG. 1, perception sensors 120A - 120D may be configured to have intersecting or overlapping fields of view that form a perception bubble that covers the entire 360° periphery of grass mowing vehicle 100-1. Perception sensors 120A - 120D can be cameras, infrared cameras or sensors, stereo or mono cameras, other image capture devices, ultrasonic sensors, RADAR sensors, LIDAR sensors, and/or any of a wide variety of other perception sensors. Further, control system 105 can include other items, such as an image processing system and/or a computer vision system that processes the sensor signals generated by perception sensors 120A - 120D to identify items in the sensor signals (e.g., items in the images captured by image capture devices), to analyze those recognized items and to perform understanding with respect to the images, as well as to perform other computer vision processing, and generate an output indicative of the perceived items. That output can be further processed to determine or confirm local supervisor presence, to confirm gestures, postures, patterns, or other actions performed by the local supervisor, or processed in other ways. The local supervisor presence, as well as the recognized gestures, postures, patterns, or other actions can be used to control the operation of grass mowing vehicle 100-1.

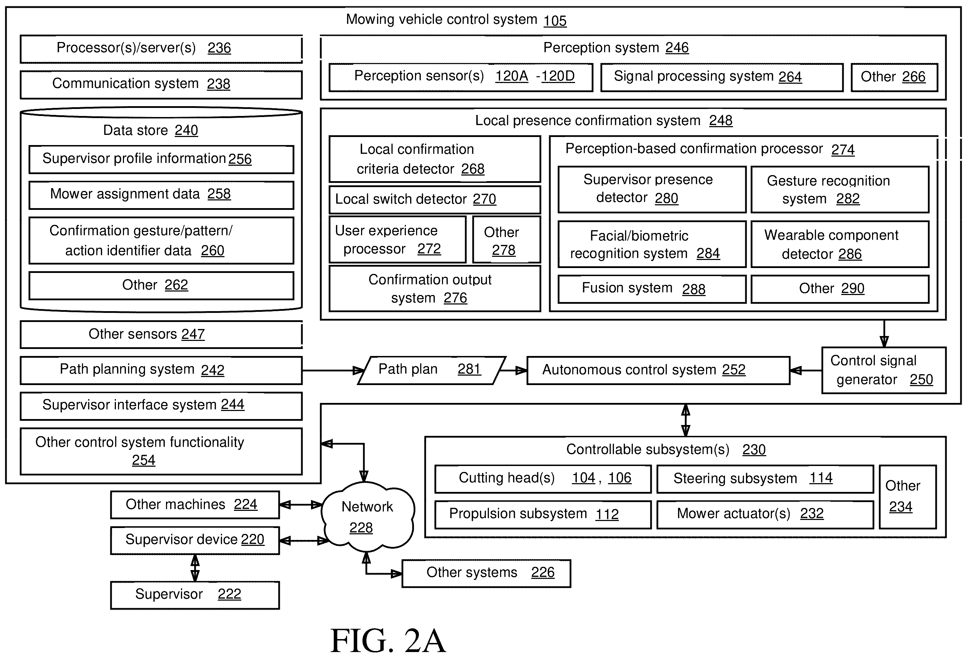

FIG. 2A is a block diagram showing one example of mowing vehicle control system 105 in more detail. FIG. 2A shows that control system 105 can interact with supervisor 222 through supervisor device 220 which may be a mobile device carried by supervisor 222 or another device. Interfaces may be generated on supervisor device 220 used by supervisor 222 or in other ways. FIG. 2A also shows that mowing vehicle control system 105 can communicate with other machines 224 and/or other systems 226 over network 228. Other machines 224 can be other mowing vehicles, tender vehicles, or other machines. Other systems 226 can be manager computing systems, systems deployed in a remote server architecture (such as in the cloud), or other systems. Therefore, network 228 can be a wide area network, a local area network, near field communication network, a Wi-Fi or Bluetooth network, a cellular communication network, and/or any of a wide variety of other networks or combinations of networks.

FIG. 2A also shows that vehicle control system 105 can automatically control one or more controllable subsystems 230. Controllable subsystems 230 can include propulsion subsystem 112, steering subsystem 114, cutting heads 104, 106, a set of raise and lower actuators 232 (which may be hydraulic cylinders, pneumatic cylinders, electric cylinders, etc, that are part of movable support apparatuses 102, 103), and any of wide variety of other controllable subsystems 234.

In the example shown in FIG. 2A, mowing vehicle control system 105 includes one or more processors or servers 236, communication system 238, data store 240, path planning system 242, supervisor interface system 244, perception system 246, a wide variety of other sensors 247, local presence confirmation system 248, control signal generator 250, autonomous control system 252 (which may include such things as a navigation system and other autonomous control functionality), as well as other control system functionality 254.

Data store 240 can include supervisor profile information 256, mower assignment data 258, confirmation gesture/pattern/other action identifier data 260, and a wide variety of other items 262. Perception system 246 can include perception sensors 120A - 120D, signal processing system 264, and other items 266. Local presence confirmation system 248 includes local confirmation criteria detector 268, local switch detector 270, user experience processor 272, perception-based confirmation processor 274, confirmation output system 276, and other items 278. Perception-based confirmation processor 274 can include supervisor presence detector 280, gesture recognition system 282, facial/biometric recognition system 284, wearable component detector 286, fusion system 288, and other items 290. Before describing the overall operation of mowing vehicle control system 105 in more detail, a description of some of the items in mowing vehicle control system 105, and their operation, will first be described.

Communication system 238 facilitates the communication of items on grass mowing vehicle 100-1 with one another and/or over network 228. Therefore, communication system 242 can be a controller area network-CAN-bus and bus controller, a local area network or wide area network communication system, a Wi-Fi, Bluetooth, near field or other communication system, a cellular communication system, or any of wide variety of other communication systems or combinations of systems.

Supervisor profile information 256 may include any of wide variety of different types of profile information that can use be used to identify supervisors. Information 256 may include such things as facial recognition data that can be used to perform facial recognition on an image of a supervisor to identify a specific supervisor. Supervisor profile information 256 can include other biometric information, such as supervisor size, shape, fingerprint data, retinal scanning data, or other biometric information. Supervisor profile information 256 can include other items as well.

Mower assignment data 258 can identify which specific supervisors are assigned to which specific grass mowing vehicles. Thus, mower assignment data 258 can be updated by shift, by location, by crew, or in other ways.

Confirmation gesture/pattern/other action identification data 260 may be data defining predefined gestures, patterns, or other actions. Thus, when perception system 246 captures an image or set of images of a human supervisor performing a gesture, pattern, or other action, the data in the captured image can be compared against features or other data defining that gesture, pattern, or other action in confirmation data 260. Confirmation gesture, pattern, other action identifier data 260 can be stored as sets of features, or in other data structures, that can be used to identify gestures, patterns, or other actions in captured images.

Path planning system 242 can be any of wide variety of different path planning systems. Such systems can include graph-based methods (such as A* and Dijkstra algorithms), sampling-based methods (such as rapidly exploring random tree-RRT-algorithms), gradient-based systems (such as artificial potential field systems), optimization-based systems (such as using model predictive control), deep supervised learning path planning techniques, interpolation curve techniques, genetic algorithms, meta-heuristic algorithms, and/or any of wide variety of other systems. Path planning system 242 illustratively automatically generates the swaths or passes and the turns connecting the swaths or passes. Path planning system 242 outputs path plan 280 which identifies the route of fairway mowing vehicle 100-1 and may also identify locations where the cutting heads 104, 106 are to be in the raised position and where cutting heads 104, 106 are to be in the lowered position.

Supervisor interface system 244 can be used to generate interfaces on supervisor device 220 using communication system 238 which communicates those interfaces over network 220 and receives indications of supervisor interactions with the interfaces. Thus, supervisor interface system 244 can be used to communicate user experiences which prompt supervisor 222 to perform certain gestures, patterns, or other actions during the local presence confirmation or for other reasons. Perception system 246 can include the perception sensors 120A - 120D or other perception sensors. Signal processing system 264 can be used to process the signals generated by the perception sensors. For instance, signal processing system 264 may be an image processing system or computer vision system that is trained to identify items in the images captured by the perception sensors 120A - 120D. Signal processing system 264 can generate an output indicative of what the perceived items are, their location relative to grass mowing vehicle 100-1, and other characteristics of the items. Thus, for example, signal processing system 264 can generate an output indicating that a human being has been perceived at a certain location relative to grass mowing vehicle 100-1. Signal processing system 264 can also generate an output indicative of the position of the extremities of that human being, the shape of the human being which may be indicative of the posture of the human being, or other items.

Other sensors 247 can include geographic position sensors, speed sensors, heading sensors, diagnostic sensors, obstacle sensors, and any of a wide variety of other sensors that may be used by other control system functionality 254 on mowing vehicle control system 105. Geographic position sensor(s) illustratively sense or detect the geographic position or location of a grass moving vehicle 100-1. For example, geographic position sensor(s) can include, but are not limited to, a global navigation satellite system (GNSS) receiver that receives signals from a GNSS satellite transmitter. Geographic position sensor(s) can also include a real-time kinematic (RTK) component that is configured to enhance the precision of position data derived from the GNSS signal. Geographic position sensor(s) can include one or more RADAR sensors, LIDAR sensor, ultrasonic sensors, or cameras that generate sensor data for use in Simultaneous Localization and Mapping (SLAM) to identify the position or location of a grass mowing vehicle 100-1. Geographic position sensor(s) can include a dead reckoning system, a cellular triangulation system, or any of a variety of other geographic position sensors.

Heading sensor(s) detect a heading characteristic (e.g., travel direction) of a grass mowing vehicle 100-1. Heading sensor(s) can include sensors that sense the movement or orientation (e.g., turn angle) of ground-engaging traction elements (e.g., wheels 110) or movement of components coupled to the ground engaging traction elements (e.g., steering shaft) or other elements, or can utilize signals received from other sources, such as geographic position sensor(s). Thus, while heading sensor(s) can be separate from geographic position sensor(s), in some examples, vehicle heading is derived from signals received from geographic position sensor(s) and subsequent processing. In other examples, heading sensors are separate sensors and do not utilize signals received from other sources.

Speed sensor(s) detect one or more speed characteristics (e.g., travel speed, acceleration, deceleration, etc.) of a grass mowing vehicle 100-1. Speed sensor(s) can include sensors that sense the movement (e.g., rotation) of ground-engaging elements (e.g., wheels 108 or wheels 110) or movement of components coupled to the ground engaging elements (e.g., drive shafts, axles), or other elements. Speed sensor(s) can include sensors, such as LIDAR or RADAR. In some examples, signals received from other sources, such as geographic position sensor(s), can be utilized to detect speed characteristics. Thus, while speed sensor(s) can be separate from geographic position sensor(s), in some examples, vehicle speed is derived from signals received from geographic position sensor(s) and subsequent processing. In other examples, speed sensor(s) are separate sensors and do not utilize signals received from other sources.

Obstacle sensor(s) can include perception sensors 120A-120D or other perception sensor(s) (such as image sensors - e.g., cameras - and image processing systems, RADAR sensors, LIDAR sensors, infrared sensors, ultrasonic sensors, ultralow band sensors, etc.), mechanical sensors, and/or any of wide variety of other sensors that sense the location of obstacles either in a global or local coordinate system or relative to mowing vehicle 100-1, or otherwise.

Local presence confirmation system 248 can be used to confirm that a human supervisor is locally present to the grass mowing vehicle 100-1. Local presence confirmation system 248 can also be used to prompt the supervisor to perform certain gestures, patterns, or other actions and to recognize gestures, patterns, or other actions performed by the supervisor in order to confirm that the supervisor has indeed performed those gestures, patterns, or other actions, or for other reasons. Local confirmation criteria detector 268 detects criteria indicating that a local confirmation should be performed. For instance, local confirmation criteria detector 268 can detect that the perception system 246 has been inactive for a predetermined amount of time. When inactive, perception system 246 cannot monitor the perception bubble generated by perception sensors 120A - 120D. Therefore, this may indicate that the supervisor's local presence should be confirmed and that an inspection should take place before autonomous operation is performed. Other local confirmation criteria can be generated by other items on grass mowing vehicle 100-1. For instance, if the perception system 246 perceives that an obstacle has intruded into the perception bubble during operation, then perception system 246 may request a local supervisor presence confirmation and this may be detected by local confirmation criteria detector 268. A diagnostic system may also request a local supervisor presence confirmation, where a diagnostic issue is detected. These and other criteria can be used by local confirmation criteria detector 268 to determine when the local presence of a supervisor needs to be confirmed.

There may be examples in which a supervisor is instructed to approach grass mowing vehicle 100-1 and actuate a local switch. Such local switch actuation can form part of the local supervisor presence confirmation process. Thus, local switch detector 270 may be configured to detect supervisor actuation of a local switch and generate an output indicative of that actuation.

User experience processor 272 is illustratively a system that can receive inputs and conduct a user experience to interact with supervisor 222. The user experience may include such things as generating outputs for supervisor 222, generating prompts for supervisor 222, generating user input mechanisms that can be actuated by supervisor 222 to provide inputs. Such input mechanisms can be icons, buttons, drop-down menus, links, text boxes, or other supervisor actuatable input mechanisms. Based upon the interactions by supervisor 222, user experience processor 272 can direct the supervisor experience as desired. Thus, user experience processor 272 can execute code that defines the different supervisor interfaces and prompts that can be generated in response to detected conditions and supervisor interactions.

Perception-based confirmation processor 274 illustratively receives, as an input, the outputs generated by signal processing system 264 and generates an output based upon the processed inputs. The systems and detectors in perception-based confirmation processor 274 may thus include such things as convolutional neural networks, artificial intelligence classifiers, machine learning systems, other artificial neural networks, or other systems that perform computer vision techniques on the captured data. Such techniques can include such things as image acquisition, image processing, analysis, and understanding of digital images, etc.

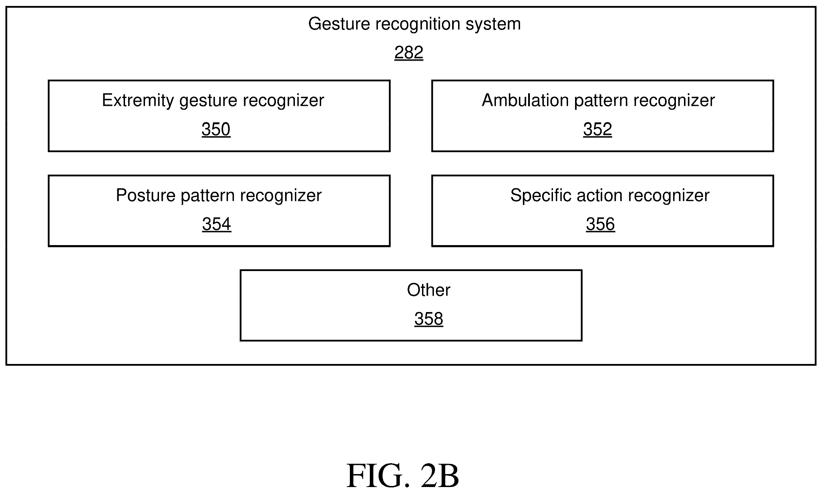

Supervisor presence detector 280 may thus be programmed to detect the presence of a supervisor in the vicinity of mowing machine 100-1. Once the supervisor is present within the vicinity of mowing vehicle 100-1, then user experience processor 272 can generate an output for the supervisor 222 prompting the supervisor to perform certain gestures, patterns, actions, or tasks that can then be recognized by gesture recognition system 282. For example, supervisor 222 may be prompted to perform a gesture with his or her hands or other extremities. Supervisor 222 may be prompted to perform an ambulation pattern (such as walking two steps in either direction, circumnavigating mowing vehicle 100-1, or performing another ambulation pattern). Supervisor 222 may be prompted to assume a certain posture or perform another specific action. Gesture recognition system 282 (one example of which is described in greater detail below with respect to FIG. 2B) may then be configured to receive the output from signal processing system 264 and perform recognition to determine whether supervisor 222 has performed the desired gesture, pattern, or other action.

Facial/biometric recognition system 284 can be used to identify the supervisor 222 by performing facial recognition or other biometric recognition (such as fingerprint recognition, retinal scanning recognition, or other recognition) and comparing that information to supervisor profile information 256. Thus, facial/biometric recognition system 284 can extract features from the captured image and process the captured features by comparing them against supervisor profile information 256, or processing them in other ways, to identify supervisor 222.

Wearable component detector 286 can be programmed to identify a particular wearable component (such as a vest, a bracelet, electronic device, gloves, or another wearable component) to determine whether supervisor 222 is locally present to mowing vehicle 100-1. By way of example, instead of performing facial recognition or biometric recognition, wearable component detector 286 may be programmed to identify a particular wearable component so that supervisor 222 is not personally identified, but instead the wearable component is identified.

Fusion system 288 can be used to combine the outputs of one or more of detector 280, systems 282 and 284, and detector 286. Based upon the combined outputs of the detectors and/or systems, fusion system 288 can determine whether supervisor 222 is locally present and/or has performed the desired gesture, pattern, or specific action.

Confirmation output system 276 may receive, as an input, the output of other items in local presence confirmation system 248, or other items, and generate an output indicative of whether supervisor 222 is confirmed as being locally present to mowing vehicle 100-1. That confirmation may indicate that supervisor 222 is within a predetermined position relative to mowing vehicle 100-1, and/or has performed a desired gesture, pattern, or specific action. Further, where the supervisor 222 has performed a gesture, pattern, or specific action, the recognized gesture, pattern, or specific action may be interpreted as a supervisor command to authorize or inhibit autonomous operation of mowing vehicle 100-1. The output of confirmation output system 276 can be provided to control signal generator 250, to user experience processor 272, or to other items. Based upon whether supervisor 222 is confirmed as being locally present to mowing vehicle 100-1 and based upon whether supervisor 222 confirms that conditions are appropriate for autonomous operation, control signal generator 250 generates control signals to control autonomous control system 252. Autonomous control system 252 can then control the controllable subsystems 230 based upon the control signals. For instance, if supervisor 222 is not locally present to mowing vehicle 100-1, or if supervisor 222 is confirmed as being locally present but provides an input indicating that conditions are not suitable for autonomous operation, then autonomous control system 252 may control controllable subsystems 230 to inhibit autonomous operation until the local presence of supervisor 222 is confirmed and/or until the conditions change. If supervisor 222 is confirmed as being locally present and performed any desirable predetermined gestures, patterns, or actions, and/or if supervisor 222 provides an input indicating that conditions are appropriate for autonomous operation, then autonomous control system 252 may control the controllable subsystems 230 to enable autonomous operation. These and other control operations can be performed. It will also be appreciated that other interlocks or other inputs can be provided to autonomous control system 252 that may be used to inhibit or authorize autonomous operation of mowing vehicle 100-1. Those inputs dealing with local supervisor presence are discussed herein as examples only.

FIG. 2B is a block diagram showing one example of gesture recognition system 282 in more detail. In the example shown in FIG. 2B, gesture recognition system 282 can include one or more of extremity gesture recognizer 350, ambulation pattern recognizer 352, posture pattern recognizer 354, specific action recognizer 356, and/or any of a wide variety of other items 358. The recognizers 350-356 can be implemented by convolutional neural networks, other artificial neural networks, artificial intelligence classifiers, machine learning systems, and/or any of a wide variety of other systems that can perform computer vision techniques, such as mage acquisition, image processing, image analysis, image understanding, and/or other techniques.

Extremity gesture recognizer 350 can be programmed to identify gestures performed by supervisor 222 moving his or her extremities. For instance, it may be that user experience processor 272 prompts supervisor 222 to move one or both extremities according to a predefined pattern. In another example, it may be that user experience processor 272 prompts supervisor 222 to perform an inspection operation that requires supervisor 222 to place one or more of his or her extremities at a desired location relative to mowing vehicle 100-1. Extremity gesture recognizer 350 may be programmed to recognize such predetermined gestures and generate an output indicative of whether supervisor 222 has performed such gestures.

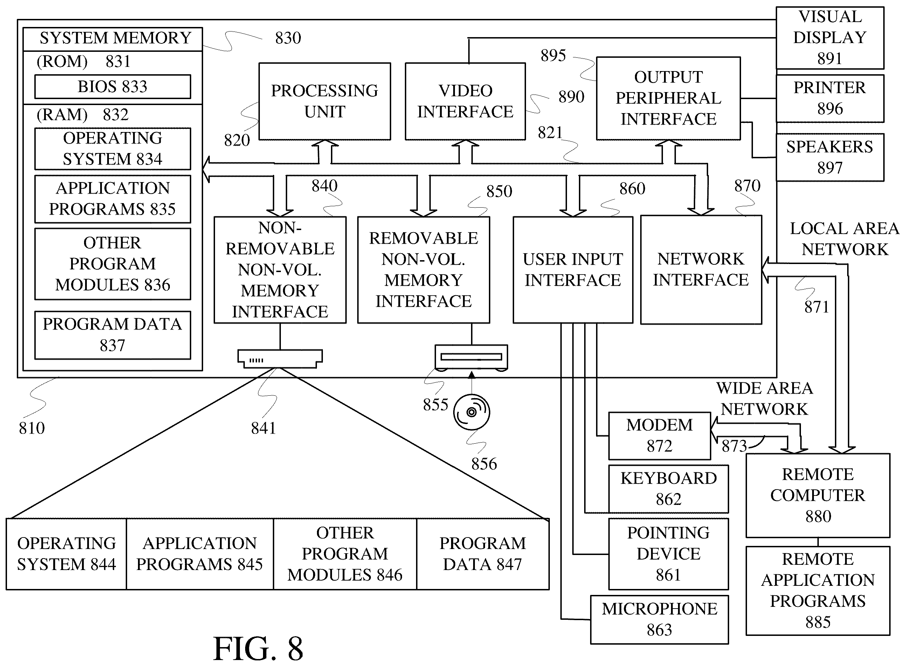

Ambulation pattern recognizer 352 may be programmed to recognize whether supervisor 222 has performed a predefined ambulation pattern. Such ambulation patterns may be designed to ensure that supervisor 222 has moved around a desired portion of the periphery of mowing vehicle 100-1, to ensure that the supervisor 222 has located himself or herself at a desired position relative to mowing vehicle 100-1, to ensure that the supervisor is actually viewing the supervisor interface and performing the prompted actions (performing the prompted ambulation pattern - such as to walk in a figure 8, to circumnavigate mowing vehicle 100-1, etc.), or to recognize other predefined patterns.

Posture pattern recognizer 354 may be programmed to recognize when supervisor 222 has assumed a desired posture. For instance, it may be that it is desirable for supervisor 222 to check each of the tires 108, 110, of mowing vehicle 100-1 to ensure that they have adequate air pressure. In that case, user experience processor 272 may prompt supervisor 222 to observe each of the tires 108, 110. Posture pattern recognizer 354 can then recognize whether supervisor 222 has turned his or her head to face each of the tires 108, 110. In another example, user experience processor 272 may prompt the supervisor to examine an area proximate cutting heads 104, 106. In that case, posture pattern recognizer 354 may be programmed to recognize whether supervisor 222 has assumed a posture indicating that supervisor 222 has indeed inspected the areas proximate cutting heads 104, 106. These are only examples of different postures that posture pattern recognizer 354 can be programmed to recognize and others are contemplated herein as well.

Specific action recognizer 356 may be programmed to recognize whether supervisor 222 has performed any other specific action. Such specific actions may include such things as examining fluid levels on mowing vehicle 100-100-1, inspecting the engine compartment of mowing vehicle 100-1, or any of a wide variety of other specific actions.

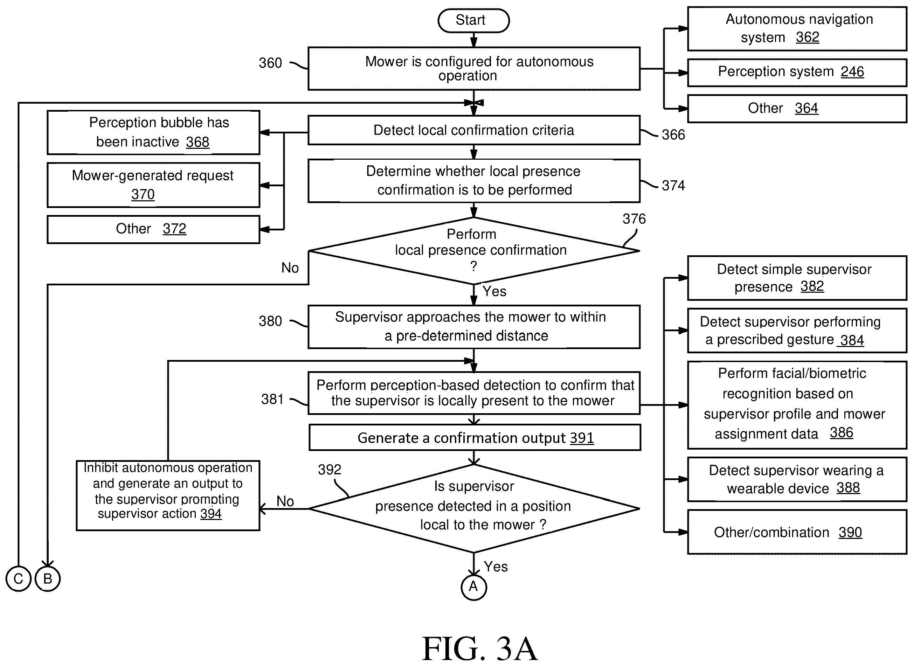

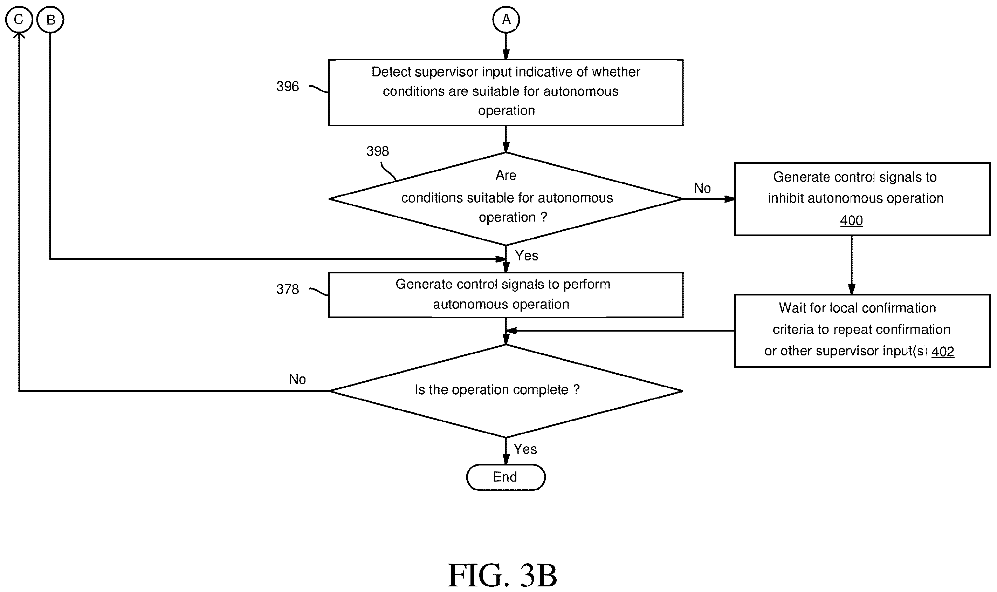

FIGs. 3A and 3B (collectively referred to herein as FIG. 3) show a flow diagram illustrating one example of the operation of mowing vehicle control system 105 in performing local presence confirmation for supervisor 222 based upon inputs received from perception system 246. It is first assumed that mowing vehicle 100-1 is configured for autonomous operation, as indicated by block 360 in the flow diagram of FIG. 3. Thus, in one example, mowing vehicle control system 105 includes an autonomous navigation system, as indicated by block 362, as well as a perception system 246. Configuring grass mowing vehicle 100-1 for autonomous operation can include a wide variety of other items and be done in other ways as well, as indicated by block 364.

Local confirmation criteria detector 268 then detects local confirmation criteria to determine whether local supervisor presence confirmation is to be performed. Detecting the local confirmation criteria is indicated by block 366 in the flow diagram of FIG. 3. For example, local confirmation criteria detector 268 may detect that the perception system 246 has been powered down so that the perception bubble has been inactive, as indicated by block 368. In another example, local confirmation criteria detector 268 can determine that grass mowing vehicle 100-1 has generated a request for local presence confirmation, as indicated by block 370. The local confirmation criteria can include a wide variety of other criteria as well, as indicated by block 352. Based upon the local confirmation criteria, local confirmation criteria detector 268 determines whether local supervisor presence confirmation is to be performed, as indicated by block 374. If not, as determined at block 376, processing continues at block 378 where control signal generator 250 generates control signals allowing autonomous control system 252 to proceed with autonomous control (although other interlock systems or other inputs may be considered as well in determining whether to allow autonomous operation). However, if, at block 376 it is determined that the local confirmation criteria indicate that local presence of supervisor 222 is to be confirmed, then user experience processor 272 may generate an output prompting supervisor 222 to approach mowing vehicle 100-1. Having supervisor 222 approach the mowing vehicle 100-1 to within a predetermined distance is indicated by block 380 in the flow diagram of FIG. 3.

Perception system 246 then begins performing perception-based detection that can be used by local presence confirmation system 248 to confirm that supervisor 222 is locally present to mowing vehicle 100-1. For instance, supervisor presence detector 280 can receive an output from signal processing system 264 and recognize the presence of a supervisor 222 within a predetermined distance of mowing vehicle 100-1. Detecting the presence of a supervisor within a predetermined distance of mowing vehicle 100-1 is indicated by block 382 in the flow diagram of FIG. 3.

Gesture recognition system 282 can receive an input from signal processing system 264 and perform gesture recognition indicating whether supervisor 222 has performed a prescribed gesture, as indicated by block 384. For instance, user experience processor 372 may prompt supervisor 222 to perform a predefined gesture with his or her extremities. Such a gesture can be recognized by extremity gesture recognizer 350. In another example, user experience processor 272 can prompt the user to perform an ambulation pattern. The ambulation pattern can be recognized by ambulation pattern recognizer 352. In another example, user experience processor 272 can prompt the user to assume one or more different postures. Such postures can be recognized by posture pattern recognizer 354. User experience processor 372 can prompt supervisor 222 to perform another specific action, and that action can be recognized by specific action recognizer 356. Gesture recognition system 282 can recognize any of a variety of other gestures as well, including gestures that are performed by supervisor 222 without being prompted. For example, it may be that certain actions, patterns, or gestures can be interpreted as indicating that conditions are not suitable for autonomous operation or indicating other conditions. Such actions, patterns, or gestures may be performed by supervisor 222 and recognized, even though they were not prompted.

In another example, facial/biometric recognition system 284 can perform facial or biometric recognition based upon supervisor profile information 256. Further, mower assignment data 258 can be accessed to ensure that the supervisor 222 that is identified using facial or other biometric recognition corresponds to the supervisor that is it assigned to this particular mowing vehicle 100-1. Performing facial and/or biometric recognition based on supervisor profile and/or mower assignment data is indicated by block 386 in the flow diagram of FIG. 3.

In another example, wearable component detector 286 can detect that supervisor 222 is wearing a wearable device, as indicated by block 388. The wearable device can be an electronic device, an article of clothing, or another device.

Fusion system 288 and other processing systems 290 can perform perception-based detection to confirm local supervisor presence in other ways or using sensor fusion by combining the output of other detectors and systems 280, 282, 284, and/or 286. Performing perception-based detection in other ways, or based on sensor fusion, is indicated by block 390 in the flow diagram of FIG. 3. Confirmation output system 276 then generates an output based on whether perception-based confirmation processor 274 indicates that the supervisor is locally present to mowing vehicle 100-1. Generating a confirmation output is indicated by block 391. If the perception-based confirmation processor 274 generates an output indicating that the supervisor 222 is not locally present to mowing vehicle 100-1, as determined at block 392 in the flow diagram of FIG. 3, then confirmation output system 276 generates an output that can be used by control system 252 inhibit autonomous operation, and confirmation output system 276 generates an output indicating that supervisor 222 is not locally present to user experience processor 272. User experience processor 272 can then generate an output to supervisor 222 prompting the supervisor 222 to perform a desired action, pattern, gesture, etc., as indicated by block 394. Processing then reverts to block 381 where perception-based confirmation processor 274 performs perception-based detection to confirm local supervisor presence.

However, if, at block 392, confirmation output system 276 detects that the supervisor 222 is locally present to mowing vehicle 100-1, then confirmation output system 276 can provide an output indicative of this to user experience processor 272 which then generates an interactive output (e.g., representative of a user interface element) for supervisor 222 on which supervisor 222 can provide an input indicating whether conditions are suitable for autonomous operation, and detect supervisor interaction with that user interface. Detecting a supervisor input indicating whether conditions are suitable for autonomous operation is indicated by block 396 in the flow diagram of FIG. 3.

For instance, user experience processor 272 may generate an output prompting supervisor 222 to provide an input indicating whether the area around grass mowing vehicle 100-1 is free of obstacles, whether the tires appear to have adequate pressure, whether the mowing units 104, 106 are suitable for operation, or any of a wide variety of other context information. If the supervisor input indicates that conditions are suitable for autonomous operation, as determined at block 398, then processing continues at block 378 where control signal generator 250 generates a control signal allowing autonomous control system 252 to perform autonomous operation.

However, if, at block 398, the supervisor input indicates that the conditions are not appropriate for mowing vehicle 100-1 to perform autonomous operation, then confirmation output system 276 generates an output indicative of this and control signal generator 250 generates control signals to autonomous control system 252 precluding autonomous control system 252 from performing autonomous operation of mowing vehicle 100-1. Generating such control signals is indicated by block 400 in the flow diagram of FIG. 3.

Local presence confirmation system 248 then waits for other local confirmation criteria to be detected, or for other supervisor inputs to be detected, as indicated by block 402. Until the mowing operation is complete, as determined at block 404, processing reverts to block 366 where the system waits for local confirmation criteria detector 268 to detect criteria indicating that local supervisor presence is to be confirmed.

It can thus be seen that the present description describes a system which automatically detects whether local supervisor presence is to be confirmed before authorizing autonomous operation of a mowing vehicle 100-1. A perception system uses perception sensors to sense an area around the periphery of mowing vehicle 100-1 and perception-based confirmation processor 274 confirms whether the perception system indicates that local supervisor presence should be confirmed. The perception-based confirmation system can sense such things as gestures, patterns, specified actions, facial or other biometric features, a wearable component, supervisor actuation of a hardware switch on mowing vehicle 100-1, or combinations of these items to determine whether local supervisor presence can be confirmed.

The present discussion has mentioned processors and servers. In one example, the processors and servers include computer processors with associated memory and timing circuitry, not separately shown. The processors or servers are functional parts of the systems or devices to which they belong and are activated by and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, recognizer, detectors, and/or logic. It will be appreciated that such systems, components, generators, recognizer, detectors, and/or logic can be comprised of hardware items (such as processors and associated memory, or other processing components, some of which are described below) that perform the functions associated with those systems, components, generators, recognizer, detectors, and/or logic. In addition, the systems, components, generators, recognizer, detectors, and/or logic can be comprised of software that is loaded into a memory and is subsequently executed by a processor or server, or other computing component, as described below. The systems, components, generators, recognizer, detectors, and/or logic can also be comprised of different combinations of hardware, software, firmware, etc., some examples of which are described below. These are only some examples of different structures that can be used to form the systems, components, generators, recognizer, detectors, and/or logic described above. Other structures can be used as well.

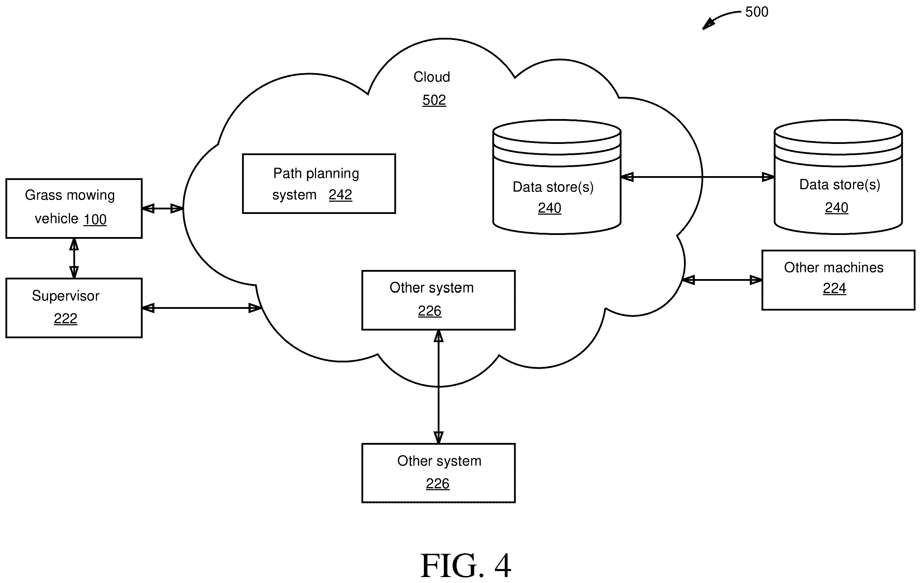

FIG. 4 is a block diagram of mowing vehicle 100-1, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 4, some items are similar to those shown in previous FIGS. and they are similarly numbered. FIG. 4 specifically shows that path planning system 242, data store 240, and other systems 226 can be located at a remote server location 502. Therefore, mowing vehicle 100-1 accesses those systems through remote server location 502.

FIG. 4 also depicts another example of a remote server architecture. FIG. 4 shows that it is also contemplated that some elements of previous FIGS are disposed at remote server location 502 while others are not. By way of example, data store 240 and other systems 226 can be disposed at a location separate from location 502, and accessed through the remote server at location 502. Regardless of where the items are located, they can be accessed directly by mowing vehicle 100-1, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

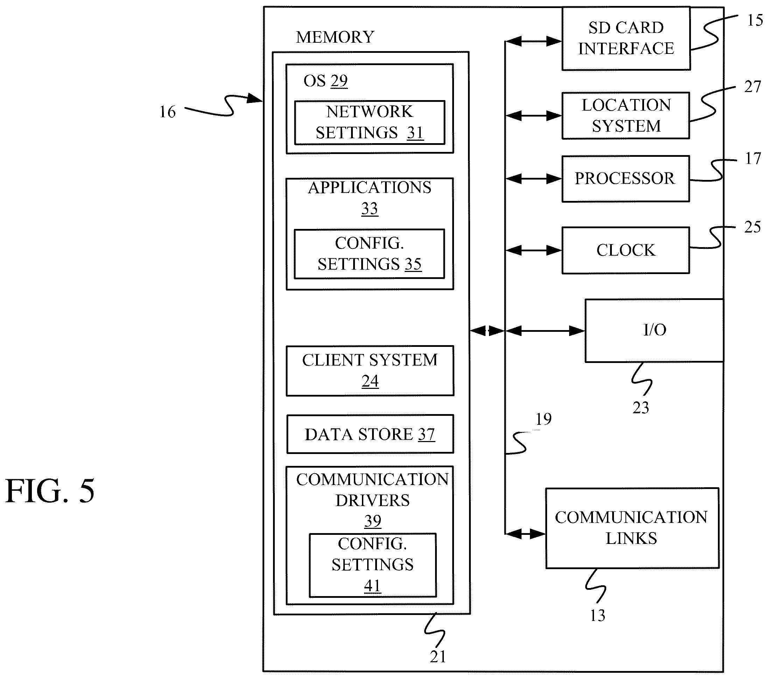

FIG. 5 is a simplified block diagram of one illustrative example of a handheld or mobile computing device that can be used as a user's or client's handheld device 16, in which the present system (or parts of it) can be deployed. For instance, a mobile device can be deployed in the supervisor compartment of mowing vehicle 100-1 or carried by supervisor 222, for use in generating, processing, or displaying local confirmation data and supervisor prompts. FIGS. 5-7 are examples of handheld or mobile devices.

FIG. 5 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

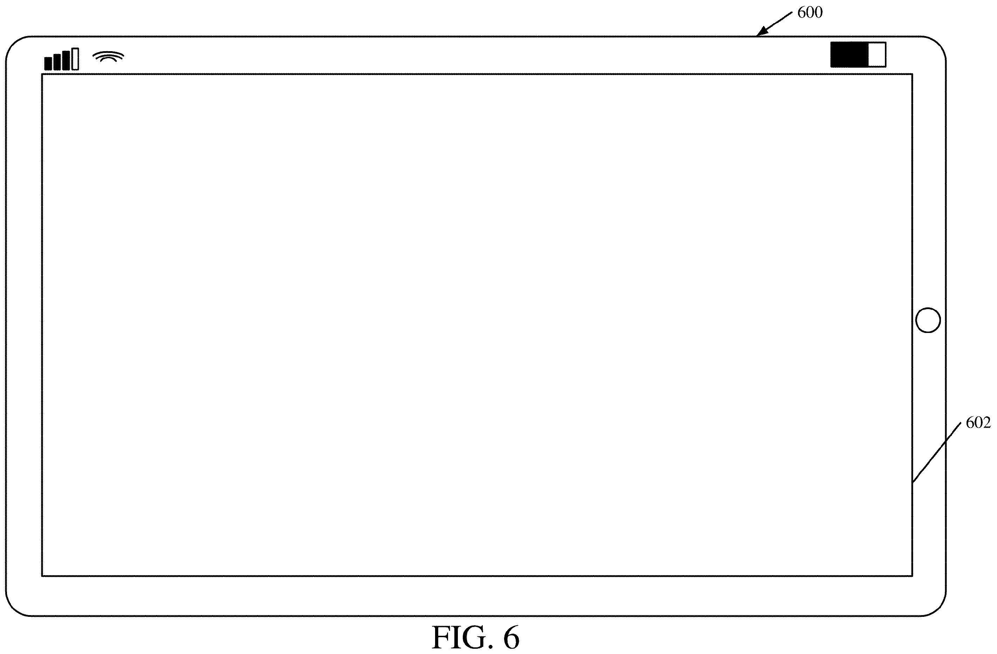

FIG. 6 shows one example in which device 16 is a tablet computer 600. In FIG. 6, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

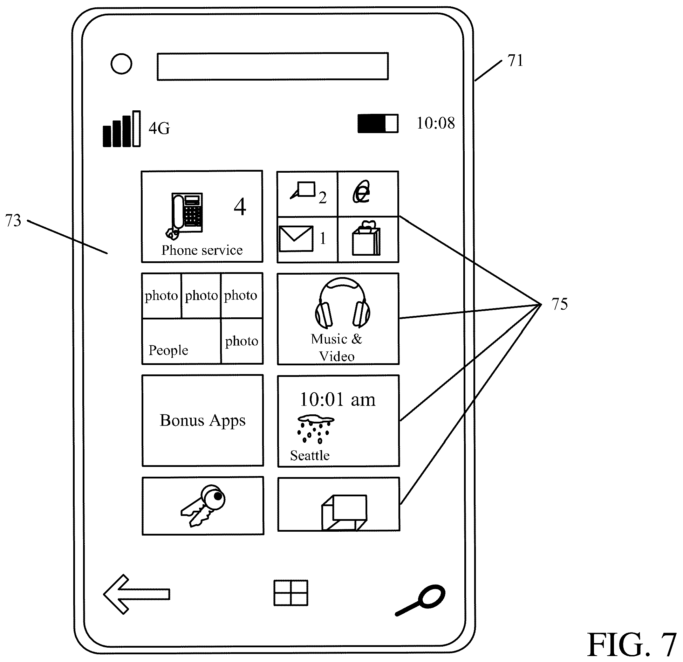

FIG. 7 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

FIG. 8 is one example of a computing environment in which elements of previous FIGS., or parts of it, (for example) can be deployed. With reference to FIG. 8, an example system for implementing some embodiments includes a computing device in the form of a computer 810 programmed to operate as described above. Components of computer 810 may include, but are not limited to, a processing unit 820 (which can comprise processors or servers from previous

FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 8.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 8 illustrates operating system 834, application programs 835, other program modules 836, and program data 837.

The computer 810 may also include other removable/non-removable volatile/nonvolatile computer storage media. By way of example only, FIG. 8 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 8, provide storage of computer readable instructions, data structures, program modules and other data for the computer 810. In FIG. 8, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 8 illustrates, for example, that remote application programs 885 can reside on remote computer 880.

## Claims

1. A grass mowing vehicle (100), comprising:
a propulsion subsystem (112);
a steering subsystem (114);
a cutting unit (104, 106);
a perception system (246), including a perception sensor (120), configured to generate a perception signal; and
a mower control system (105) configured to determine whether a human supervisor (222) is locally present to the grass mowing vehicle (100) based on the perception signal and control autonomous operation (252) of the grass mowing vehicle (100) based on whether the human supervisor (222) is locally present to the grass mowing vehicle (100).

2. The grass mowing vehicle (100) of claim 1 wherein the mower control system (105) is
configured to
generate a control signal to inhibit autonomous operation (252) of the grass mowing vehicle (100) if the perception signal indicates that the human supervisor (222) is not locally present to the grass mowing vehicle (100).

3. The grass mowing vehicle (100) of claim 1 or 2, wherein the mower control system (105) comprises:
a user experience processor (272) configured to generate a control signal to prompt the human supervisor (222) to provide an supervisor input indicative of authorization to perform autonomous operation (252), if the perception signal indicates that the human supervisor (222) is locally present to the grass mowing vehicle (100).

4. The grass mowing vehicle (100) of one of the claims 1 to 3, wherein the mower control system (105) comprises:
a confirmation output system (276) configured to generate a presence confirmation output confirming that the human supervisor (222) is locally present to the grass mowing vehicle (100); and
a control system (250) configured to generate a control signal to control autonomous operation (252) of the grass mowing vehicle (100) based on the presence confirmation output.

5. The grass mowing vehicle (100) of one of the claims 1 to 4, wherein the mower control system (105) comprises:
a gesture recognition system (282) configured to determine, based on the perception signal, whether the human supervisor (222) has performed a pre-defined gesture, wherein the confirmation output system (276) configured to generate a presence confirmation output confirming that the human supervisor (222) is locally present to the grass mowing vehicle (100) if the gesture recognition system (282) determines that the human supervisor (222) has performed the pre-defined gesture.

6. The grass mowing vehicle (100) of claim 5, wherein the user experience processor (272) is configured to generate a user experience prompting the human supervisor (222) to perform the pre-defined gesture.

7. The grass mowing vehicle (100) of claim 5 or 6, wherein the gesture recognition system (282) comprises:
an extremity gesture recognizer (350) configured to process the perception signal to determine whether the human supervisor (222) has performed a pre-defined gesture with an extremity of the human supervisor (222).

8. The grass mowing vehicle (100) of one of the claims 5 to 7, wherein the gesture recognition system (282) comprises:
an ambulation pattern recognizer (352) configured to process the perception signal to determine whether the human supervisor (222) has performed a pre-defined ambulation pattern.

9. The grass mowing vehicle (100) of one of the claims 5 to 8, wherein the gesture recognition system (282) comprises:
a posture pattern recognizer (354) configured to process the perception signal to determine whether the human supervisor (222) has assumed a pre-defined posture.

10. The grass mowing vehicle (100) of one of the claims 5 to 9, wherein the gesture recognition system (282) comprises:
a specific action recognizer (356) configured to process the perception signal to determine whether the supervisor (222) has performed a pre-defined action.

11. The grass mowing vehicle (100) of one of the claims 1 to 10, wherein the mower control system (105) comprises:
a facial/biometric recognition system (284) configured to performing facial or biometric recognition based on the perception signal to identify the human supervisor (222).

12. The grass mowing vehicle (100) of one of the claims 1 to 11, wherein the mower control system (105) comprises:
a wearable component detector (286) configured to identify whether the human supervisor (222) is wearing a specified wearable device and generate a wearable device detected signal, and wherein the confirmation output system (276) is configured to generate a presence confirmation output confirming that the human supervisor (222) is locally present to the grass mowing vehicle (100) based on the wearable device detected signal.

13. A computer implemented method of operating a grass mower vehicle, comprising the grass mowing vehicle (100) of one of the claims 1 to 12, the method further comprising:
generating (360) a perception signal with the perception system (246) on a grass mowing vehicle (100);
determining (381) whether a human supervisor (222) is locally present to the grass mowing vehicle (100) based on the perception signal;
generating (391) a presence confirmation output indicative of whether the human supervisor (222) is locally present to the grass mowing vehicle (100); and
controlling (378) autonomous operation (252) of the grass mowing vehicle (100) based on the presence confirmation output.

14. The computer implemented method of claim 13 wherein controlling autonomous operation (252) comprises:
if the presence confirmation output indicates that the human supervisor (222) is not locally present to the grass mowing vehicle (100), then generating a control signal to inhibit autonomous operation (252) of the grass mowing vehicle (100).

15. The computer implemented method of claim 13 or 14, wherein controlling autonomous operation (252) comprises:
if the presence confirmation output indicates that the human supervisor (222) is locally present to the grass mowing vehicle (100), then generating a control signal to prompt the human supervisor (222) to provide an supervisor input indicative of authorization to perform autonomous operation (252); and
controlling autonomous operation (252) based on the supervisor input.
